**Europäisches Patentamt**

**European Patent Office**

**Office européen des brevets**

(19)

(11) Veröffentlichungsnummer : **0 504 449 B1**

(12) # EUROPÄISCHE PATENTSCHRIFT

(45) Veröffentlichungstag der Patentschrift :
**21.06.95 Patentblatt 95/25**

(51) Int. Cl.⁶ : **H02M 7/529, H02M 7/5387, H02P 5/40**

(21) Anmeldenummer : **91104269.5**

(22) Anmeldetag : **19.03.91**

(54) **Verfahren und Vorrichtung zur Erzeugung von Schaltzustandssignalen aus einem Steuerspannungszeiger.**

(43) Veröffentlichungstag der Anmeldung :
**23.09.92 Patentblatt 92/39**

(45) Bekanntmachung des Hinweises auf die Patenterteilung :
**21.06.95 Patentblatt 95/25**

(84) Benannte Vertragsstaaten :
**DE FR GB IT**

(56) Entgegenhaltungen :
**US-A- 4 800 478**
**US-A- 4 994 956**
**International Power Electronics Conference IPEC, Tokio, 1983, Seiten 1665 bis 1675.**

(73) Patentinhaber : **SIEMENS AKTIENGESELLSCHAFT**
**Wittelsbacherplatz 2**
**D-80333 München (DE)**

(72) Erfinder : **Holtz, Joachim, Prof. Dr.-Ing.**
**Am Forsthof 16**
**W-5600 Wuppertal 1 (DE)**
Erfinder : **Beyer, Bernd, Dipl.-Ing.**
**Ravensberger Strasse 13**
**W-5600 Wuppertal 1 (DE)**

**Beschreibung**

Die Erfindung bezieht sich auf ein Verfahren zur Erzeugung von Schaltzustandssignalen aus einem Steuerspannungszeiger für einen Pulsstromrichter und auf eine Vorrichtung zur Durchführung des Verfahrens.

Beim Betrieb von Pulsstromrichtern in Drehstromantrieben großer Leistung ist man bemüht, die Schaltfrequenz gering zu halten, um die Höhe der Schaltverluste zu begrenzen. Dies geht allerdings zu Lasten erhöhter Verzerrungsströme auf der Drehstromseite. Die Folge sind erhöhte Verluste in der Maschine, höhere Spitzenwerte des Laststromes und höhere Drehmomentpulsationen.

Aus diesem Grunde besteht bei Pulsstromrichtern niederer Schaltfrequenz der Wunsch, die Verzerrungsströme durch Anwendung optimierender Steuerverfahren gering zu halten. Insbesondere ist versucht worden, das Optimierungsproblem durch offline-berechnete Pulsmuster zu lösen. In die Berechnung geht der Arbeitspunkt des Antriebs als Parameter ein. Die Ergebnisse der Optimierung werden im Online-Betrieb des Wechselrichters aus einem Festwertspeicher abgerufen und zur Steuerung des Pulsstromrichters verwendet.

Die Verwendung von optimierten Pulsmustern im Modulator des Pulsstromrichters, löst die Optimierungsaufgabe nur für den stationären Betrieb. In transienten Betriebszuständen kommen die Vorteile von optimierten Pulsmustern nicht zur Geltung.

Um eine optimale Pulssteuerung auch in transienten Betriebszuständen zu erreichen, muß die Optimierung in Echtzeit vorgenommen werden. Eine derartige Optimierung ist im Aufsatz "A Predictive Controller for the Stator Current Vector of AC Machines Fed from a Switched Voltage Source" von J.Holtz und S.Stadtfeld, abgedruckt in International Power Electronics Conference IPEC, Tokio, 1983, Seiten 1665 bis 1675. Die Optimierung in Echtzeit ist zeitkritisch, läßt sich aber dennoch durch die Anwendung geeigneter Strategien lösen. Eine geeignete Strategie ist im Aufsatz "A PWM Inverter Drive System with On-Line Optimized Pulse Patterns" von H.Holtz und S.Stadtfeld, abgedruckt in First European Conference on Power Electronics and Application EPE, Brüssel, 1985, Seiten 3.21 bis 3.25.

Echtzeitoptimierende Steuerverfahren besitzen die Eigenschaft der Stromeinprägung. Insbesondere kann das Pulsmuster nur im geschlossenen Stromregelkreis erzeugt werden. Hieraus ergeben sich Nachteile bei der Inbetriebnahme und Einschränkungen beim Entwurf der Regelstrukturen. Weiterhin kann die Optimierung der Pulsfolge immer nur für das kurze Zeitintervall zwischen zwei Wechselrichterkommutierungen durchgeführt werden. Im Vergleich zur Optimierung über eine Grundschwingungsperiode sind deshalb die Freiheitsgrade eingeschränkt Die erreichbare Güte ist geringer. Schließlich lassen sich mit echtzeitoptimierenden Steuerverfahren keine grundschwingungssynchronen Pulsmuster erzeugen.

Aus der Dissertation "Untersuchung von Modulationsverfahren für Pulsstromrichter mit hohen dynamischen Anforderungen bei beschränkter Schaltfrequenz" von G.Stanke, 1987, ist ein Modulationsverfahren bekannt, das soweit wie möglich sinusförmige Modulation nach dem Raumzeigerverfahren verwendet, wobei Pulsverhältnisse bis herunter zur 9-fach-Taktung vorkommen, dann optimierte Pulsmuster mit Pulsverhältnissen 9, 7, 5 verwenden, dann folgt die 3-fach-Taktung und die Grundschwingungstaktung. Wegen der gemeinsamen Sollwertvorgabe und Synchronisierzeitpunkte für alle drei Zweige des Pulsstromrichters werden nur Pulsmuster mit der "edge-pulse"-Lage verwendet. Außerdem dürfen bei diesem Modulationsverfahren im Bereich $60° \leqq \omega_{1t} \leqq 120°$ sowie $240° \leqq \omega_{1t} \leqq 300°$ keine Schaltvorgänge auftreten, was bei den Winkeln für Oberschwingungselminination sowie bei den Winkeln für minimale Oberschwingungsverluste bei großen Aussteuerungen erfüllt ist. Mit diesen Voraussetzungen, nämlich die Vermeidung von Ausgleichsvorgängen beim Wechseln des synchronen Pulsmusters im quasistationären Betrieb, kann eine zusammenhängende Berechnung und Ausgabe der Schaltzeiten für alle drei Zweige für jeden 60°-Sektor durchgeführt werden. Ein transientfreier Wechsel ist hier nur bei den Winkelargumenten $\pi/2$ und $3\pi/2$ möglich. Da das Modulationsverfahren sowohl sinusförmige als auch optimierte Pulsmuster generieren soll, besteht der Modulator überwiegend aus einem Mikrorechnersystem, dem einerseits eine Zählerschaltung mit nachgeschalteter Speicheranordnung und andererseits pro Zweig ein Zähler und zur Synchronisierung ein weiterer Zähler nachgeschaltet ist. Dieses Modulationsverfahren und der dazugehörige Modulator ist, da es mehere Modulationsverfahren kombiniert, sehr aufwendig. Außerdem kann dieses Verfahren transiente Zustände, die durch die Arbeitsweise des Pulsmodulators beim Auftreten von dynamischen Vorgängen im überlagerten Regelsystem ausgelöst werden, nicht vermeiden.

Der Erfindung liegt nun die Aufgabe zugrunde, ein Verfahren und eine Vorrichtung zum Verarbeiten von Steuerspannungswerten zu Schaltzustandssignalen anzugeben, bei dem die bekannten Mängel behoben sind.

Diese Aufgabe wird erfindungsgemäß gelöst durch die Merkmale des Anspruchs 1 und des Anspruchs 10.

Zunächst wird in Abhängigkeit von Betrag und Frequenz des Steuerspannungszeigers, der den Sollwert des Ständerspannungs-Raumzeigers darstellt und von einer übergeordneten Regeleinrichtung erzeugt wird, ein offline vorausberechnetes optimales Pulsmuster ausgewählt. Das Argument des Steuerspannungs-Raumzeigers bestimmt aus dem gewählten Pulsmuster die aktuellen Schaltzustände und die abgespeicherte und als Winkel normierte Pulsbreite wird in die tatsächliche Zeitdauer anhand der vorgegebenen Drehfrequenz umgerechnet und die Schaltzustände zum Pulsstromrichter ausgegeben. Mittels des ausgewählten Pulsmusters und des Steuerspannungszeigers wird eine komplexe Größe bestimmt, die als Oberschwingungs-Sollzeiger bei einer Modulationsfehler-Regelung verwendet wird. Die Ermittlung eines Oberschwingungs-Istzeigers stützt sich auf den Steuerspannungs-Raumzeiger (Grundschwingungsgröße) und einen Meßwert des Ständerspannungs-Raumzeigers. Ein Vergleich mit dem Oberschwingungs-Sollzeiger ergibt den Modulationsfehler, der durch die Bearbeitung der bestimmten Schaltzustände ausgeregelt wird. Dieser Modulationsfehler kann durch die Betrachtung aufeinanderfolgender Pulswechsel in endlicher Zeit ausgeregelt werden oder der aktuelle Modulationsfehler kann bei jedem Pulswechsel minimiert werden.

Ein derartiger Modulationsfehler oder auch Stromfehler tritt sowohl im quasistationären Betrieb bei einem Wechsel der synchronen Taktwahl als auch im dynamischen Betrieb auf. Durch das erfindungsgemäße Verfahren kann dieser Modulationsfehler ermittelt werden, der dann durch geeignete Wahl der Bearbeitung der Schaltzustände diesen Modulationsfehler minimieren bzw. in einer endlichen Zeit ausregeln kann. D.h., im stationären Betrieb wird der Pulsstromrichter mit Pulsmustern betrieben, die unter Beachtung von Optimalkriterien offline vorausberechnet sind, und im nicht stationären Betrieb wird eine geeignete Pulsfolge durch Online-Berechnungen erzeugt. Diese Pulsfolge erfüllt die Anforderungen einer überlagerten Regelung mit hoher dynamischer Güte.

Bei einem vorteilhaften Verfahren werden die offline berechneten Schaltzustände derart bearbeitet, daß ein Übergang von aktuellem Schaltzustand zum folgenden um eine Zeitspanne verschoben wird. Durch eine geeignete Berechnung dieser Verschiebungszeit kann die Komponente des Stromfehlers in die Richtung der Differenzspannung kompensiert werden. Die verbleibende Stromkomponente wird beim nächsten Pulswechsel weiter verkleinert.

Zur Berechnung der Verschiebungszeit sind verschiedene Algorithmen denkbar. Bei Minimierung des aktuellen Stromfehlers bei jedem Pulswechsel wird die Verschiebungszeit aus der Projektion des Fehlerzeigers auf den Differenzspannungzeiger bestimmt. Es ergibt sich dabei folgende Gleichung:

$$\Delta t_s = \frac{\Delta u \cdot m}{|\Delta u|^2} \quad (1)$$

Bei der Anwendung des Verfahrens nach Gleichung (1) wird der Modulationsfehler $\underline{m}$ in Form eines gedämpften Einschwingvorganges, der sich über eine gewisse Anzahl von Schaltzustandsanordnungen hinweg erstreckt, verschwinden. Die Verschiebungszeit für zwei nächste Umschaltaugenblicke wird mittels folgender Gleichung:

$$\Delta \underline{u}_1 \cdot \Delta t_1 + \Delta \underline{u}_2 \cdot \Delta t_2 = \underline{m} \quad (2)$$

ermittelt. Es besteht jedoch die Gefahr, daß für $\Delta \underline{u}_1 = \Delta \underline{u}_2$ das Gleichungssystem singulär wird. In diesem Fall wird auf den Algorithmus zurückgegriffen, mit dem der Modulationsfehler bei jedem Pulswechsel minimiert wird.

Da die Algorithmen nur den Umschaltaugenblick verschieben, werden keine zusätzlichen Wechselrichterkommutierungen erfordert, so daß sich die Schaltfrequenz des Pulsstromrichters nicht erhöht. Im stationären Fall ist der Modulationsfehler ausgeregelt und die Verschiebungszeit wird Null, so daß die Folge diskreter, komplexer Schaltzustandszeiger, erzeugt aus einem ausgewählten optimalen Pulsmuster, unverändert in Schaltzustandssignale umgesetzt wird.

Bei einem weiteren vorteilhaften Verfahren werden die bestimmten Schaltzustände derart bearbeitet, daß zusätzliche Pulse eingefügt werden. Da die betrachteten Zeigergrößen zwei Komponenten besitzen, sind auch zwei zusätzliche Pulse ausreichend, um einen Fehler auszuregeln. Zur Berechnung dieser Zeiten kann das Gleichungssystem

$$(\underline{u}_{p1} - \underline{u}_s) \cdot t_1 + (\underline{u}_{p2} - \underline{u}_s) \cdot t_2 = \underline{m} \quad (3)$$

dienen, wobei $\underline{u}_s$ der augenblickliche Spannungszeiger der mittels eines ausgewählten Pulsmusters erzeugten Folge diskreter, komplexer Schaltzustandszeiger ist und $\underline{u}_{p1}$ sowie $\underline{u}_{p2}$ die zusätzlichen Zeiger sind.

Da durch diesen Eingriff in die bestimmten Schaltzustände die Schaltfrequenz des Pulsstromrichters erhöht wird, ist dieses Verfahren bei großen Stromfehlern zu verwenden.

Bei der Berechnung des Oberschwingungs-Sollzeigers und des Oberschwingungs-Istzeigers wird ein vereinfachtes Maschinenmodell einer mittels des Pulsstromrichters gespeisten Antriebsmaschine verwendet. In beiden Modellen ist der einzige Parameter die Streuinduktivität der Arbeitsmaschine. Da bei der Berechnung der Verschiebungszeit oder der zusätzlichen Pulse dieser Parameter wieder herausfällt, ist die Modulationsfehler-Regelung parameterunabhängig. Der Oberschwingungs-Sollzeiger, der auf der Basis eines vereinfachten Maschinenmodells gemäß der Gleichung nach Anspruch 8 berechnet wird, ist die Differenz der Spannungszeitflächen, die aus der für den stationären Betrieb bei einer Aussteuerung optimierten Schaltfolge und dem zu dieser Schaltfolge gehörenden Grundschwingungs-Raumzeigers gebildet wird. Dabei ist der Aussteuerungswert eine wertdiskret veränderliche Größe, die den für veränderliche Aussteuerung vorausberechneten optimalen synchronen Pulsmustern zuzuordnen ist.

Bei der Berechnung des Oberschwingungs-Istzeigers, der auf der Basis eines vereinfachten Modells berechnet wird, kann sich diese auf den Steuerspannungszeiger und einen Meßwert des Ständerspannungs-Raumzeigers stützen. Der Ständerspannungs-Raumzeiger kann auch aus den Schaltzustandssignalen ermittelt werden. Durch die Messung des tatsächlichen Ständerspannungs-Raumzeigers werden allerdings gleich die durch den Umrichter erzeugten Totzeiten erfaßt und gehen somit in die Berechnung des Modulationsfehlers ein. Damit wird auch der störende Einfluß solcher Totzeiten behoben.

Da bei der Bestimmung von Oberschwingungs-Soll- und -Istzeigern jeweils ein vereinfachtes Maschinenmodell zugrundegelegt wird, werden nur Integratoren verwendet, wodurch die Berechnung einfach ist.

Bei einer erfindungsgemäßen Vorrichtung zur Durchführung des Verfahrens mit einem Pulsweitenmodulator mit zugeordnetem Speicher und einer Einrichtung zum Erzeugen von Schaltzustandssignalen ist eine Einrichtung zur Korrektur eines Modulationsfehlers vorgesehen. Am ersten Eingang dieser Einrichtung steht ein Steuerspannungszeiger an, wobei am dritten Eingang dieser Einrichtung ein Meßwert eines Ständerspannungs-Raumzeigers ansteht. Der zweite Eingang der Einrichtung ist mit einem Ausgang des Pulsmodulators und der Ausgang der Einrichtung ist mit einem Eingang der Einrichtung zum Erzeugen von Schaltzustandssignalen verknüpft. Durch diese Erweiterung des Modulators um die Modulationskorrektur-Einrichtung können im dynamischen Betrieb bestimmten Schaltzustände online korrigiert werden, wodurch die entstehenden Schaltzustandssignale die Anforderung einer überlagerten Regelung mit hoher dynamischer Güte erfüllt.

Vorteilhafte Ausgestaltungen der Vorrichtung sind den Ansprüchen 11 bis 13 zu entnehmen.

Zur weiteren Erläuterung der Erfindung wird auf die Zeichnung Bezug genommen, in der Ausführungsbeispiele einer Vorrichtung zur Durchführung des erfindungsgemäßen Verfahrens schematisch veranschaulicht sind.

Figur 1      zeigt ein Blockschaltbild einer Ausführungsform eines erfindungsgemäßen Modulators, in

Figur 2      ist ein Blockschaltbild einer weiteren Ausführungsform des Modulators dargestellt,

Figur 3      veranschaulicht den Verlauf mehrerer Ständerstromtrajektorien $\underline{i}_{sa1}$, $\underline{i}_{sa2}$ für zwei verschiedene Pulsmuster, die

Figur 4      veranschaulicht den tatsächlichen Verlauf der Ständerstromtrajektorie $\underline{i}_s$ bei einem sprunghaften Wechsel des Pulsmusters, in

Figur 5      ist eine Darstellung der Spannungsraumzeiger dargestellt, in

Figur 6      sind mögliche Korrekturzeiger bei einer Kommutierung zwischen den Zuständen k=1 und k=2 dargestellt und die

Figur 7      veranschaulicht die Wirkungsweise der Modulationsfehler-Regelung anhand der Ständerstromtrajektorie $\underline{i}_s$.

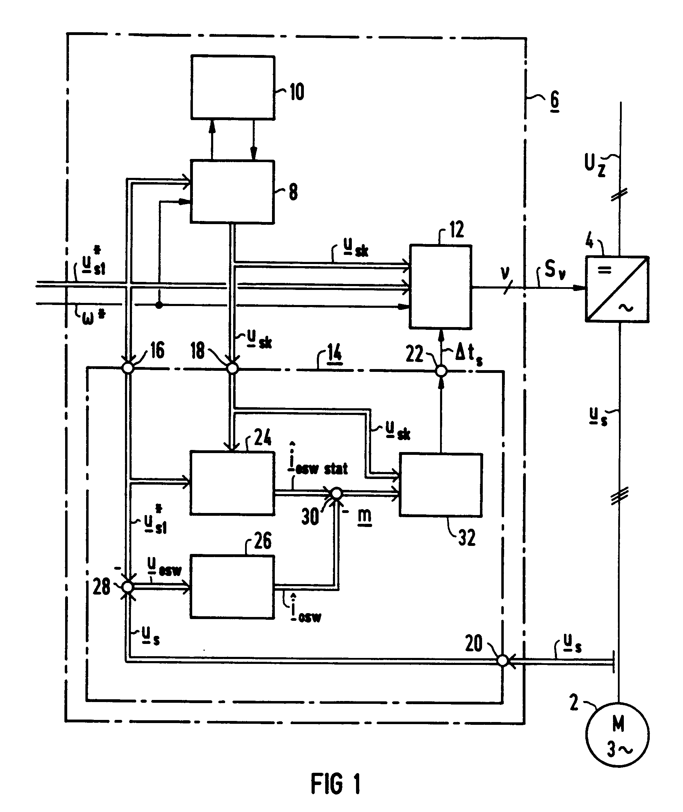

Die Figur 1 zeigt eine dreiphasige Induktionsmaschine 2, die mittels eines Stromrichters 4, insbesondere eines Pulsstromrichters, aus einer Gleichspannungsquelle mit einer vorgegebenen Gleichspannung $U_Z$ gespeist wird. Die Schaltzustandssignale $S_v$, die die Stromrichterventile des Wechselrichters 4 steuern, werden in Abhängigkeit eines Steuerspannungszeigers $\underline{u}_{s1}^*$ und einer Drehfrequenz $\omega*$ mittels einer Vorrichtung 6 erzeugt. Die Anzahl der erzeugten Schaltzustandssignale $S_v$ hängt von der Stromrichterschaltung des Wechselrichters 4 ab. Ist der Aufbau des Wechselrichters 4 eine Drehstrom-Brückenschaltung, so werden die Schaltzustandssignale $S_1$, $S_2$ und $S_3$ erzeugt. Ist als Wechselrichter 4 ein Dreipunktwechselrichter vorgesehen, so werden die Schaltzustandssignale $S_1,...,S_6$ erzeugt. Für große Leistungen ist der Pulsstromrichter 4 ein Dreipunktwechselrichter, dessen Schaltfrequenz gering gehalten wird, um die Schaltverluste zu begrenzen.

Der eingangsseitige Steuerspannungszeiger $\underline{u}_{s1}^*$ der Vorrichtung 6, auch Steuersatz oder Modulator genannt, ist der Sollwert des Ständerspannungs-Raumzeigers der Maschine 2, der als eine stetige Grundschwingungsgröße aufzufassen ist. Dieser Sollzeiger wird von einer übergeordneten Regeleinrichtung erzeugt, die aus Übersichtlichkeitsgründen nicht dargestellt ist. Eine solche Regeleinrichtung kann beispielsweise nach dem Verfahren der Feldorientierung arbeiten. Die Drehfrequenz $\omega*$ ist der Sollwert der Drehfrequenz des Motors 2. Außerdem ist dem Modulator 6 ein Meßwert des Ständerspannungs-Raumzeigers $\underline{u}_s$ zugeführt.

Der Steuersatz 6 enthält einen Pulsweitenmodulator 8 mit zugeordnetem Speicher 10, eine Einrichtung 12 zum Erzeugen von Schaltzustandssignalen $S_v$ und eine Einrichtung 14 zur Korrektur eines Modulationsfehlers $\underline{m}$, der auch als Modulationskorrekturschaltung bezeichnet wird. Der eingangs am Steuersatz 6 anstehende Steuerspannungszeiger $\underline{u}_{s1}^*$ wird dem Pulsweitenmodulator 8, der Einrichtung 12 und einem ersten Eingang 16 der Modulationskorrekturschaltung 14 zugeführt. Die Drehfrequenz $\omega*$, die ebenfalls eine Eingangsgröße des Steuersatzes 6 ist, wird dem Pulsweitenmodulator 8 und der Einrichtung 12 zugeführt. Der Ausgang des Pulsweitenmodulators 8 ist einerseits mit einem zweiten Eingang 18 der Modulationskorrekturschaltung 14 und andererseits mit einem Eingang der Einrichtung 12 zur Erzeugung der Schaltzustandssignale $S_v$ ver-

knüpft. Einem dritten Eingang 20 dieser Modulationskorrekturschaltung 14 wird der Meßwert des Ständerspannungs-Raumzeigers $\underline{u}_s$ zugeführt. Der Ausgang 22 dieser Modulationskorrekturschaltung 14 ist mit einem weiteren Eingang der Einrichtung 12 zum Erzeugen von Schaltzustandssignalen $S_v$ verknüpft.

Die Modulationskorrekturschaltung 14 enthält zwei gleiche Maschinenmodelle 24 und 26, zwei Differenzglieder 28 und 30 und eine Recheneinheit 32. Diese Maschinenmodelle 24 und 26 sind jeweils ein Oberschwingungsersatzmodell der Regelstrecke, die aus einer umrichtergespeisten Induktionsmaschine 2 besteht. Im einfachsten Fall ist das Ersatzmodell eine Induktivität, deren Wert dem Wert der Streuinduktivität $L_\sigma$ der Induktionsmaschine 2 entspricht. Das erste Maschinenmodell 24 ist eingangsseitig mit dem ersten Eingang 16 der Einrichtung 14 und ausgangsseitig mit dem Plus-Eingang des zweiten Differenzgliedes 30 verknüpft, dessen Ausgang mit der Recheneinheit 32 verbunden ist. Der erste Eingang 16 der Einrichtung 14 ist außerdem mit dem Minus-Eingang des ersten Differenzgliedes 28 verknüpft, dessen Plus-Eingang mit dem dritten Eingang 20 der Modulationskorrekturschaltung 14 verbunden ist. Ausgangsseitig ist das erste Differenzglied 28 mit dem Eingang des zweiten Maschinenmodells 26 verknüpft, dessen Ausgang mit dem Minus-Eingang des zweiten Differenzgliedes 30 verbunden ist. Der zweite Eingang 18 der Modulationskorrekturschaltung 14 ist einerseits mit einem weiteren Eingang des ersten Maschinenmodells 24 und andererseits mit einem weiteren Eingang der Recheneinheit 32 verknüpft.

Im Speicher 10 sind optimale, grundschwingungssynchrone Pulsmuster abgespeichert, die nach einem Optimierungskriterium für stationäre Betriebspunkte unterschiedlicher Aussteuerung $a_i$ offline vorausberechnet sind. Der Pulsweitenmodulator 8 erzeugt nach Maßgabe des Spannungssollwert-Zeigers $\underline{u}_{s1}^*$ eine Folge diskreter, komplexer Schaltzustandszeiger $\underline{u}_{sk}$, nachdem in Abhängigkeit von Betrag und Frequenz dieses Sollwertzeigers $\underline{u}_{s1}^*$ ein optimales Pulsmuster aufgerufen worden ist. Diese Folge diskreter, komplexer Schaltzustandszeiger $\underline{u}_{sk}$ wird einerseits der Einrichtung 12 und andererseits der Modulationskorrekturschaltung 14 zugeführt. In Abhängigkeit des Arguments des Sollwertzeigers $\underline{u}_{s1}^*$ bestimmt die Einrichtung 12 aus der Folge diskreter, komplexer Schaltzustandszeiger $\underline{u}_{sk}$ den aktuellen Schaltzustand. Außerdem rechnet die Einrichtung 12 die abgespeicherte und als Winkel normierte Pulsbreite in die tatsächliche Zeitdauer anhand der vorgegebenen Drehfrequenzen $\omega*$ um und gibt diese Schaltzustände als Schaltzustandssignal $S_v$ zum Wechselrichter 4 aus.

Bei einer vorteilhaften Ausführungsform des Modulators 6 sind die Bausteine 8, 10 und 12 durch einen Mikrocomputer mit nachgeschalteter Zähleranordnung mit Flip-Flops verwirklicht.

Der Pulsweitenmodulator 8 steuert außerdem das erste Maschinenmodell 24 der Modulationskorrekturschaltung 14 an, das eine komplexe Größe $\underline{i}_{oswstat}(a_i)$ erzeugt, die auch als Oberschwingungs-Sollzeiger bezeichnet wird. Dieser Sollzeiger $\underline{i}_{oswstat}$ wird zur Beurteilung der Modulationsgüte verwendet. Der Oberschwingungs-Sollzeiger $\underline{i}_{oswstat}(a_i)$ wird auf der Basis eines vereinfachten Modells der Antriebsmaschine 2 nach folgender Rechenvorschrift gebildet:

$$\underline{i}_{oswstat}(a_i)=1/L_\sigma \int_0^t (\underline{u}_{sk}(a_i)-\underline{u}_{s1}(a_i))dt+\underline{c} \qquad (4)$$

mit $a_i$ = konstant.

Dieses Signal $\underline{i}_{oswstat}(a_i)$ ist die Differenz der Spannungszeitflächen, die aus der für den stationären Betrieb bei Aussteuerung $a_i$ optimierten Schaltfolge $\underline{u}_{sk}(a_i)$ und dem zu dieser Schaltfolge gehörigen Grundschwingungsraumzeiger $\underline{u}_{s1}$ gebildet wird. Dabei ist $a_i$ eine wertdiskrete, veränderliche Größe, die den für veränderliche Aussteuerung vorausberechneten optimalen synchronen Pulsmustern zuzuordnen ist. Die Integrationskonstante $\underline{c}$ bestimmt sich nach

$$\underline{c}= -1/T \int_{t-T}^t 1/L_\sigma \int_0^t (\underline{u}_{sk}(a_i)-\underline{u}_{s1}(a_i))dt \; dt \qquad (5)$$

Dies bedeutet, daß der Wert von Gleichung (4) den im speziellen Fall des stationären Betriebs auftretenden Spannungszeitflächenfehler repräsentiert. Es ist wichtig zu bemerken, daß sich die Auswertung von der Gleichung (4) ausschließlich auf die der Aussteuerung $a_i$ zugeordnete stationäre Pulsfolge $\underline{u}_{sk}(a_i)$ bezieht. Soll-

te sich in einem nicht stationären Betriebszustand die Aussteuerung $a_i$ des Pulsweitenmodulators 8 ändern, so wird die Gleichung (4) für die im Betrachtungszeitpunkt gültige Aussteuerung so berechnet, als bestehe der gleiche Aussteuerungswert in einem schon für längere Zeit andauernden Stationärzustand.

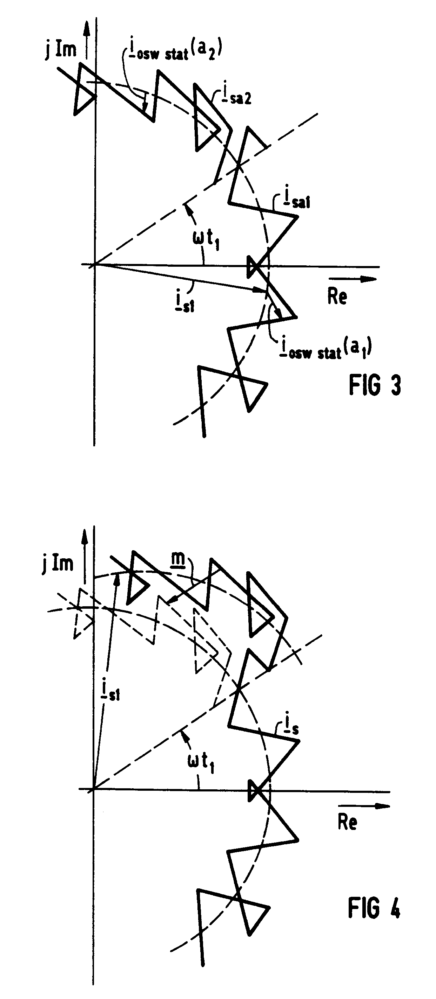

Dieser Sachverhalt wird durch den in Figur 3 dargestellten Verlauf der stationären Ständerstromtrajektorien $\underline{i}_{sa1}$ und $\underline{i}_{sa2}$ für zwei verschiedene Werte der Aussteuerungen deutlich. Zum Zeitpunkt $t_1$ ändert sich die Aussteuerung des Pulsstromrichters 4. Die für $t>t_1$ gültige Trajektorie $\underline{i}_{sa2}$ zeigt einen nicht stetigen Übergang.

Mittels des zweiten Maschinenmodells 26 wird der tatsächlich auftretende Oberschwingungs-Raumzeiger $\underline{i}_{osw}$, der aus als Oberschwingungs-Istzeiger $\underline{i}_{osw}$ bezeichnet wird, berechnet. Diese Berechnung stützt sich auf einen ermittelten Spannungsdifferenzzeiger $\underline{u}_{osw}$, der mittels des ersten Differenzgliedes 28 aus dem Spannungssollwertzeiger $\underline{u}_{s1}^{*}$ und dem Meßwert des Ständerspannungs-Raumzeigers $\underline{u}_s$ erzeugt wird. Das zweite Maschinenmodell 26 ist in Bezug auf die Struktur und die Parameter mit dem durch die Gleichung (4) definierten ersten Modell 24 identisch. Ein Vergleich des Raumzeigers $\underline{i}_{osw}$ mit dem bei der tatsächlich gewählten Aussteuerung unter der Annahme des stationären Betriebs berechneten Oberschwingungs-Raumzeigers $\underline{i}_{oswstat}$ wird als unerwünschte Abweichung des Oberschwingungs-Raumzeigers $\underline{i}_{oswstat}$ aufgefaßt und im folgenden als Modulationsfehler $\underline{m}$ bezeichnet.

Eine solche Abweichung tritt stets in nicht stationären Betriebszuständen auf. Am Beispiel des Diagramms der Figur 4 ist der tatsächliche Verlauf der Ständerstromtrajektorie $\underline{i}_s$ bei einem sprunghaften Wechsel des Pulsmusters zur Zeit $t_1$ dargestellt. Die hiermit verbundene Änderung des Grundschwingungsstromes $\underline{i}_{s1}$ kennzeichnet einen Ausgleichsvorgang.

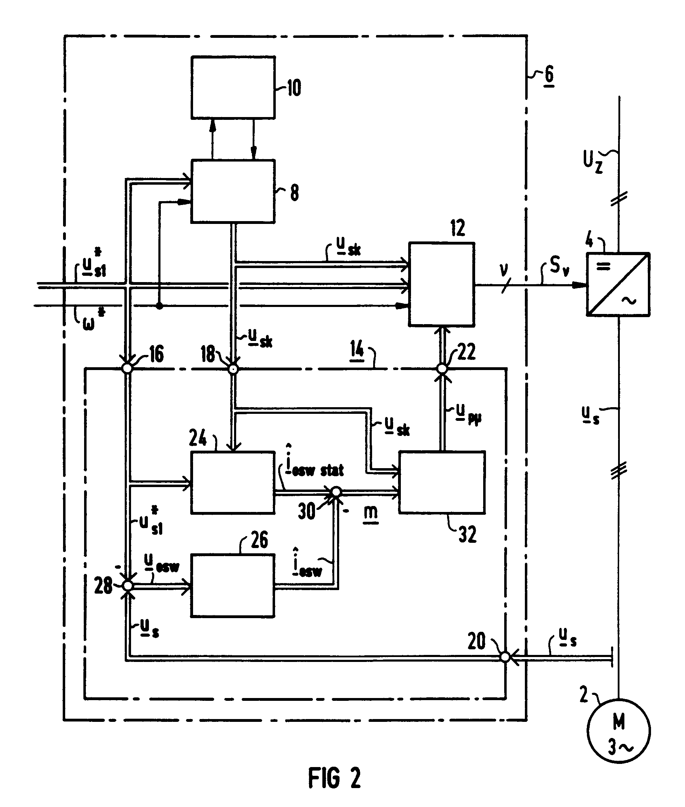

Die Modulationskorrekturschaltung 14, insbesondere die Recheneinheit 32, verkürzt zeitlich den Ausgleichsvorgang und führt die Ständerstromtrajektorie $\underline{i}_s$ in möglichst kurzer Zeit auf die als Sollkurve aufzufassende Trajektorie $\underline{i}_{sa2}$ des neuen stationären Betriebs hin. Diese Recheneinheit 32 kann, wie in der Figur 1 gezeigt, eine Verschiebungszeit $\pm\Delta t_s$ berechnen und an seinen Ausgang bereitstellen oder aber Schaltzustände $\underline{u}_{p\mu}$ des Wechselrichters 4, abweichend von der Vorgabe des Pulsweitenmodulators 8, erzeugen, wie in der Figur 2 gezeigt ist. Das Blockschaltbild der Figur 2 ist nur mit Ausnahme des Ausgangssignals der Modulationskorrekturschaltung 14 identisch mit dem Blockschaltbild der Figur 1.

Das Produkt des im dynamischen Betrieb auftretenden Modulationsfehlers $\underline{m}$ und der Streuinduktivität $L_\sigma$ der verwendeten Induktionsmaschine 2 kann als ein Fehler in der Spannungszeitfläche des Pulsmusters verstanden werden und ist nach Gleichung (4) parameterunabhängig Die Recheneinheit 32 hat nun verschiedene Möglichkeiten (Figur 1, Figur 2), um durch einen Eingriff in die laufenden Schaltzustandssignale $S_v$ diese Spannungszeitfläche zu regeln.

Durch die Generierung einer Verschiebungszeit $\pm\Delta t_s$ besteht die Möglichkeit, den Übergang des aktuellen Schaltzustandes zum folgenden um diese Zeit $\pm\Delta t_s$ zu verschieben. Durch eine geeignete Berechnung dieser Verschiebungszeit $\pm\Delta t_s$ kann die Komponente des Stromfehlers $\underline{m}$ in der Richtung der Differenzspannung kompensiert werden. Die verbleibende Stromfehlerkomponente kann beim nächsten Pulswechsel weiter verkleinert werden. Zur Berechnung der Zeit $\pm\Delta t_s$ sind verschiedene Algorithmen denkbar. So kann bei jedem Pulswechsel der aktuelle Stromfehler $\underline{m}$ minimiert werden oder durch die Betrachtung aufeinanderfolgender Pulswechsel in endlicher Zeit ausgeregelt werden. Im ersten Fall kann die Verschiebungszeit $\Delta t_s$ aus der Projektion des Fehlerzeigers auf den Differenzspannungszeiger bestimmt werden. Es ergibt sich die Gleichung:

$$\Delta t_s = \frac{\Delta \underline{u} \cdot \underline{m}}{|\Delta \underline{u}|^2} \quad (1)$$

Alternativ dazu folgen aus der Lösung des Gleichungssystems:

$$\Delta \underline{u}_1 \cdot \Delta t_1 + \Delta \underline{u}_2 \cdot \Delta t_2 = \underline{m} \quad (2)$$

zwei Werte $\Delta t_1$ und $\Delta t_2$ für die Verschiebungszeit $\Delta t_s$, welche während der nächsten zwei Umschaltaugenblicke die fehlende Spannungszeitfläche liefern. Hier besteht jedoch die Gefahr, daß für $\Delta \underline{u}_1 = \Delta \underline{u}_2$ das Gleichungssystem singulär wird. Damit muß auf das erste Verfahren zurückgegriffen werden, welches den Fehler in jedem Schritt minimiert.

Da in beiden Fällen die Algorithmen nur den Umschaltaugenblick verschieben, wird die Schaltfrequenz nicht erhöht. Im stationären Fall ist der Modulationsfehler $\underline{m}$ ausgeregelt und die Verschiebungszeit $\pm\Delta t_s$ wird Null, so daß die Folge diskreter, komplexer Schaltzustandszeiger $\underline{u}_{sk}$ von der Einrichtung 12 unverändert verarbeitet wird.

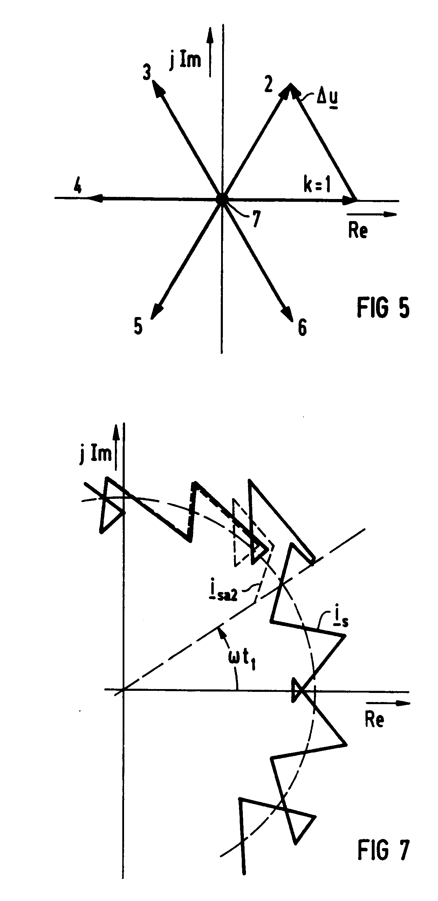

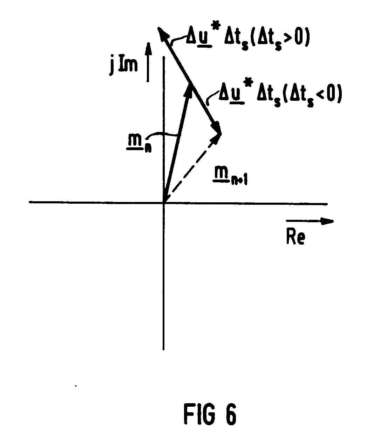

Aus dem vorher Gesagten folgt, daß der komplexe Modulationsfehler $\underline{m}$, der ja im allgemeinen Fall eine beliebige Richtung hat, nur dann verschwinden kann, wenn mindestens zwei Korrekturzeiger $\Delta \underline{u} \cdot \Delta t_s$ (Spannungszeitfläche) unterschiedlicher Richtung zur Verfügung stehen. In der Figur 6 sind mögliche Werte von $\Delta \underline{u} \cdot \Delta t_s$ bei einer Kommutierung zwischen den Zuständen $k=1$ und $k=2$ gemäß der Darstellung der Spannungsraumzeiger nach Figur 5 in einem Zeigerdiagramm dargestellt. Länge und Richtung dieser Korrekturzeiger $\Delta \underline{u} \cdot \Delta t_s$ sind abhängig von Betrag und Vorzeichen der Verschiebungszeit $\Delta t_s$.

Bei der Anwendung linearer Regelalgorithmen wird der Modulationsfehler $\underline{m}$ in Form eines Einschwingvorganges verschwinden, der sich über eine gewisse Anzahl von Schaltzustandsänderungen hinweg erstreckt. Dies ist beispielshaft in der Figur 6 gezeigt.

Alternativ ist auch ein Ausregeln des Modulationsfehlers nach zwei Schaltzustandsänderungen nach Art eines dead-beat-reponse möglich. Hier ist eine genaue numerische Auswertung von Soll- und Isttrajektorien erforderlich, die dann eine exakte Berechnungsgröße ermöglicht.

Bei einer weiteren Möglichkeit zur Korrektur des komplexen Modulationsfehlers $\underline{m}$ werden zusätzliche Pulse in die Folge diskreter komplexer Schaltzustandszeiger eingefügt. Da die betrachteten Zeigergrößen zwei Komponenten besitzen, sind auch zwei zusätzliche Pulse ausreichend, um den Modulationsfehler $\underline{m}$ auszu-regeln. Zur Berechnung dieser Zeiten kann das Gleichungssystem

$$(\underline{u}_{p1} - \underline{u}_s) \cdot t_1 + (\underline{u}_{p2} - \underline{u}_s) \cdot t_2 = \underline{m} \quad (3)$$

dienen, wobei $\underline{u}_s$ der augenblickliche Spannungszeiger der mittels eines ausgewählten Pulsmusters erzeugten Folge diskreter, komplexer Schaltzustandszeiger $\underline{u}_{sk}$ ist und $\underline{u}_{p1}$ sowie $\underline{u}_{p2}$ die zusätzlichen Zeiger sind. Da durch diesen Eingriff die Schaltfrequenz des Pulsstromrichters 4 erhöht wird, ist dieses Verfahren bei großen Stromfehlern einzusetzen.

Dieses erfindungsgemäße Verfahren hat den Vorteil, daß der Strom auch bei Störungen, entstanden durch Störgrößen oder Pulsmusterwechsel, auf die aus der Optimierung folgende ideale Form gezwungen wird. Das Verfahren nutzt lediglich die Verschiebung von Pulsflanken und benötigt keine Umschaltungen auf spezielle transiente Zwischenpulse. D.h., im stationären Betrieb wird der Pulsstromrichter 4 mit Pulsmustern betrieben, die unter Beachtung von Optimalkriterien offline vorausberechnet worden sind. Im nicht stationären Betrieb wird eine geeignete Pulsform durch Online-Rechnungen erzeugt. Diese Pulsfolge erfüllt die Anforderungen einer überlagerten Regelung mit hoher dynamischer Güte.

Somit können beim Betrieb von Pulsstromrichtern in Drehstromantrieben großer Leistung mit geringer Schaltfrequenz die Verzerrungsströme selbst im dynamischen Betrieb gering gehalten werden.

## Patentansprüche

1. Verfahren zur Erzeugung von Schaltzustandssignalen ($S_v$) aus einem Steuerspannungszeiger ($\underline{u}_1^*$) für ei-nen Pulsstromrichter (4), wobei in Abhängigkeit des Steuerspannungszeigers ($\underline{u}_{s1}^*$) und einer Drehfre-quenz ($\omega*$) aus einer aus einem optimierten Pulsmuster erzeugten Folge diskreter, komplexer Schaltzu-standszeiger ($\underline{u}_{sk}$) Schaltzustände ($S_v$) bestimmt werden, die mit einem Korrektursignal ($\Delta t_s, \underline{u}_{p\mu}$) derart versehen werden, daß ein in Abhängigkeit des Steuerspannungszeigers ($\underline{u}*_{s1}$), der erzeugten Folge dis-kreter, komplexer Schaltzustandszeiger ($u_{sk}$) und eines gemessenen Ständerspannungszeigers ($\underline{u}_s$) er-mittelter komplexer Modulationsfehler ($\underline{m}$) zu Null geregelt wird, wobei dieses Korrektursignal ($\Delta t_s, \underline{u}_{p\mu}$) in Abhängigkeit der erzeugten Folge diskreter, komplexer Schaltzustandszeiger ($\underline{u}_{sk}$) und des ermittelten komplexen Modulationsfehlers ($\underline{m}$) berechnet wird.

2. Verfahren nach Anspruch 1, **gekennzeichnet** durch folgende Verfahrensschritte:
   a) in Abhängigkeit von Betrag und Frequenz des Steuerspannungszeigers ($\underline{u}_{s1}^*$) wird ein optimiertes Pulsmuster aus offline berechneten und abgespeicherten optimierten Pulsmustern ausgewählt,
   b) aus diesem ausgewählten Pulsmuster wird eine Folge diskreter, komplexer Schaltzustandszeiger ($\underline{u}_{sk}$) erzeugt,
   c) in Abhängigkeit von Argument und Frequenz des Steuerspannungszeigers ($\underline{u}_{s1}^*$) werden mittels dieser Folge diskreter, komplexer Schaltzustandszeiger ($\underline{u}_{sk}$) die Schaltzustände ($S_v$) bestimmt,
   d) in Abhängigkeit vom Steuerspannungszeiger ($\underline{u}_{s1}^*$) und der Folge diskreter, komplexer Schaltzu-standszeiger ($\underline{u}_{sk}$) wird ein Oberschwingungs-Sollzeiger ($i_{oswstat}$) bestimmt,
   e) in Abhängigkeit eines aus dem Steuerspannungszeiger ($\underline{u}_{s1}^*$) und eines gemessenen Ständerspan-nungswertes ($\underline{u}_s$) ermittelten Spannungsdifferenzzeigers ($\underline{u}_{osw}$) wird ein Oberschwingungs-Istzeiger ($i_{osw}$) bestimmt,
   f) dieser Oberschwingungs-Istzeiger ($i_{osw}$) wird vom Oberschwingungs-Sollzeiger ($i_{oswstat}$) subtrahiert und
   g) der daraus resultierende Modulationsfehler ($\underline{m}$) wird durch Bearbeitung der bestimmten Schaltzu-stände ($S_v$) ausgeregelt.

3. Verfahren nach Anspruch 1, **dadurch gekennzeichnet**, daß die bestimmten Schaltzustände ($S_v$) derart bearbeitet werden, daß ein Übergang vom aktuellen Schaltzustand zum folgenden um eine Zeitspanne

EP 0 504 449 B1

($\pm\Delta t_s$) verschoben wird.

4. Verfahren nach Anspruch 1, **dadurch gekennzeichnet,** daß die bestimmten Schaltzustände ($S_v$) derart bearbeitet werden, daß zusätzliche Pulse ($\underline{u}_{p1}$, $\underline{u}_{p2}$) eingefügt werden.

5. Verfahren nach Anspruch 3, **dadurch gekennzeichnet,** daß die Verschiebezeit ($\pm\Delta t_s$) gemäß folgender Gleichung:

$$\Delta t_s = \frac{\Delta u \cdot m}{|\Delta \underline{u}|^2}$$

berechnet wird.

6. Verfahren nach Anspruch 3, **dadurch gekennzeichnet,** daß die Verschiebezeit ($\pm\Delta t_s$) gemäß folgender Gleichung:

$$\Delta \underline{u}_1 \cdot \Delta t_1 + \Delta \underline{u}_2 \cdot \Delta t_2 = \underline{m}$$

berechnet wird.

7. Verfahren nach Anspruch 4, **dadurch gekennzeichnet,** daß die zusätzlichen Pulse ($\underline{u}_{p1}$, $\underline{u}_{p2}$) jeweils eine Zeitdauer ($t_1$, $t_2$) aufweisen, die gemäß folgender Gleichung:

$$(\underline{u}_{p1} - \underline{u}_s) \cdot t_1 + (\underline{u}_{p2} - \underline{u}_s) \cdot t_2 = \underline{m}$$

mit $\underline{u}_s$ = augenblickliche Steuerspannungszeiger ermittelt werden.

8. Verfahren nach Anspruch 2, **dadurch gekennzeichnet,** daß der Oberschwingungs-Sollzeiger ($i_{oswstat}$) gemäß folgender Gleichung:

$$\underline{i}_{oswstat}(a_i) = 1/L_\delta \int_0^t (\underline{u}_{sk}(a_i) - \underline{u}_{s1}(a_i)) dt + \underline{c}$$

mit

$a_i$ = const. = Aussteuerung
$\underline{c}$ = Integrationskonstante

berechnet wird, wobei die Integrationskontante ($\underline{c}$) gemäß folgender Gleichung:

$$\underline{c} = -1/T \int_{t-T}^t 1/L_\delta \int_0^t (\underline{u}_{sk}(a_i) - \underline{u}_{s1}(a_i)) dt \; dt$$

bestimmt wird.

9. Verfahren nach Anspruch 2, **dadurch gekennzeichnet,** daß der Oberschwingungs-Istzeiger ($i_{osw}$) gemäß folgender Gleichung:

$$\underline{i}_{osw}(a_i) = 1/L_\delta \int_0^t \underline{u}_{osw}(a_i) dt + \underline{c}$$

mit

$a_i$ = const. = Aussteuerung
$\underline{c}$ = Integrationskonstante

berechnet wird, wobei die Integrationskontante ($\underline{c}$) gemäß folgender Gleichung:

8

$$\underline{c} = -1/T \int_{t-T}^{t} 1/L_\sigma \int_{0}^{t} (\underline{u}_{osw}(a_i))dt \; dt$$

bestimmt wird.

10. Vorrichtung (6) zur Durchführung des Verfahrens nach einem der Ansprüche 1 bis 9 mit einem Pulsweitenmodulator (8) mit zugeordneten Speicher (10) und einer Einrichtung (12) zum Erzeugen von Schaltsignalen (S ), **dadurch gekennzeichnet,** daß eine Einrichtung (14) zur Korrektur eines Modulationsfehlers ($\underline{m}$) vorgesehen ist, deren erstem Eingang (16) ein Steuerspannungswert ($\underline{u}^*_{s1}$) , deren zweitem Eingang (18) ein Folge diskreter, komplexer Schaltzustandszeiger ($\underline{u}_{sk}$) und deren drittem Eingang (20) ein gemessener Ständerspannungswert ($\underline{u}_s$) zugeführt sind und deren Ausgang (22) mit der Einrichtung (12) zum Erzeugen von Schaltsignalen ($S_v$) verknüpft ist.

11. Vorrichtung (6) nach Anspruch 10, **dadurch gekennzeichnet,** daß die Einrichtung (14) zur Korrektur eines Modulationsfehlers ($\underline{m}$) zwei gleiche Maschinenmodelle (24, 26) enthält, deren Ausgänge über ein zweites Differenzglied (30) eingangsseitig mit einer Recheneinheit (32) verbunden sind, deren Ausgang den Ausgang (22) der Einrichtung (14) bildet, daß der erste Eingang (16) der Einrichtung (14) mit dem Eingang des ersten Maschinenmodells (24) und mit einem Minus-Eingang eines ersten Differenzgliedes (28) verknüpft ist, dessen Ausgang eingangsseitig mit dem zweiten Maschinenmodell (26) verbunden ist, wobei der Plus-Eingang des ersten Differenzgliedes (28) mit dem dritten Eingang (20) der Einrichtung (14) verbunden ist, und daß der zweite Eingang (18) der Einrichtung (14) einerseits mit dem ersten Maschinenmodell (24) und andererseits mit der Recheneinheit (32) verknüpft ist.

12. Vorrichtung (6) nach Anspruch 11, **dadurch gekennzeichnet,** daß als Maschinenmodelle (24, 26) jeweils ein Integrator vorgesehen ist.

13. Vorrichtung (6) nach Anspruch 11, **dadurch gekennzeichnet,** daß als Einrichtung (14) zur Korrektur eines Modulationsfehlers ($\underline{m}$) ein Mikrocomputer vorgesehen ist.

## Claims

1. Process for generating control state signals ($S_v$) from a control voltage vector ($u*_i$) for a pulse-controlled converter (4), whereby control state signals ($S_v$) are determined from a sequence of discrete, complex control state vectors ($\underline{u}_{sk}$), produced from an optimized pulse pattern, in relation to the control voltage vector $\underline{u}*_{s1}$ and a rotational frequency $\omega*$, which control state signals ($S_v$) are provided with a correction signal ($\Delta t_s$, $\underline{u}_{p\mu}$) such that a complex modulation error ($\underline{m}$) determined in relation to the control voltage vector ($\underline{u}*_{s1}$), the generated sequence of discrete, complex control state vectors ($\underline{u}_{sk}$) and a measured stator voltage vector ($\underline{u}_s$), is reduced to zero, this correction signal ($\Delta t_s$, $\underline{u}_{p\mu}$) being calculated in relation to the generated sequence of discrete, complex control state vectors ($\underline{u}_{sk}$) and the calculated complex modulation error ($\underline{m}$).

2. Process according to Claim 1, characterised by the following procedural steps:
   a) an optimized pulse pattern is selected from optimized pulse patterns calculated off line and stored, in relation to the absolute value and frequency of the control voltage vector ($\underline{u}*_{s1}$),
   b) a sequence of discrete, complex control state vectors ($\underline{u}_{sk}$) is generated from this selected pulse pattern,
   c) the control states ($S_v$) are determined by means of this sequence of discrete, complex control state vectors ($\underline{u}_{sk}$) in relation to the argument and frequency of the control voltage vector ($\underline{u}*_{s1}$),
   d) a harmonic setpoint vector ($i_{oswstat}$) is determined in relation to the control voltage vector ($\underline{u}*_{s1}$) and the sequence of discrete, complex control state vectors ($\underline{u}_{sk}$),
   e) a harmonic actual-value vector ($i_{osw}$) is determined in relation to a voltage difference vector ($\underline{u}_{osw}$) calculated from the control voltage vector ($\underline{u}*_{s1}$) and a measured stator voltage value ($\underline{u}_s$),
   f) this harmonic actual-value vector ($i_{osw}$) is subtracted from the harmonic setpoint vector ($i_{oswstat}$) , and
   g) the resulting modulation error ($\underline{m}$) is corrected by processing the determined control states ($S_v$).

3. Process according to Claim 1, characterised in that the determined control states ($S_v$) are processed in such a way that a transition from the current control state to the following one is displaced by a time interval ($\pm \Delta t_s$).

4. Process according to Claim 1, characterised in that the determined control states ($S_v$) are processed in such a way that additional pulses ($\underline{u}_{p1}$), $\underline{u}_{p2}$) are inserted.

5. Process according to Claim 3, characterised in that the displacement time ($\pm \Delta t_s$) is calculated according to the following equation:

$$\Delta t_s = \frac{\Delta u \cdot m}{|\Delta \underline{u}|^2}$$

6. Process according to Claim 3, characterised in that the displacement time ($\pm \Delta t_s$) is calculated according to the following equation:

$$\Delta \underline{u}_1 . \Delta t_1 + \Delta \underline{u}_2 . \Delta t_2 = \underline{m}$$

7. Process according to Claim 4, characterised in that the additional pulses ($\underline{u}_{p1}$, $\underline{u}_{p2}$) each have a time period ($t_1$, $t_2$) that is calculated according to the following equation:

$$(\underline{u}_{p1} - \underline{u}_s).t_1 + (\underline{u}_{p2} - \underline{u}_s).t_2 = \underline{m}$$

where $\underline{u}_s$ is the instantaneous control voltage vector.

8. Process according to Claim 2, characterised in that the harmonic setpoint vector ($\underline{i}_{oswstat}$) is calculated according to the following equation:

$$\underline{i}_{oswstat}(a_i) = 1/L_\sigma \int_0^t (\underline{u}_{sk}(a_i) - \underline{u}_{s1}(a_i)) \, dt + \underline{c}$$

where $a_i$ is a constant = modulation
$\underline{c}$ is an integration constant,
the integration constant (c) being determined according to the following equation:

$$\underline{c} = -1/T \int_{t-T}^t 1/L_\sigma \int_0^t (\underline{u}_{sk}(a_i) - \underline{u}_{s1}(a_i)) \, dt \, dt$$

9. Process according to Claim 2, characterised in that the harmonic actual-value vector ($\underline{i}_{osw}$) is calculated according to the following equation:

$$\underline{i}_{osw}(a_i) = 1/L_\sigma \int_0^t (\underline{u}_{osw}(a_i) \, dt + \underline{c}$$

where $a_i$ is a constant = modulation
$\underline{c}$ is an integration constant
the integration constant (c) being determined according to the following equation:

$$\underline{c} = -1/T \int_{t-T}^t 1/L_\sigma \int_0^t (\underline{u}_{osw}(a_i)) \, dt \, dt$$

10. Device (6) for implementing the process according to one of the Claims 1 to 9, having a pulse-width modulator (8) with associated memory (10) and a device (12) for generating control signals (S$_v$), characterised in that a device (14) is provided for correcting a modulation error ($\underline{m}$), to the first input (16) of which device (14) is fed a control voltage value ($\underline{u}*_{s1}$), to whose second input (18) is fed a sequence of discrete, complex control state vectors ($\underline{u}_{sk}$) and to whose third input (20) is fed a measured stator voltage value ($\underline{u}_s$) and whose output (22) is linked to the device (12) for generating control signals (S$_v$).

11. Device (6) according to Claim 10, characterised in that the device (14) for correcting a modulation error $\underline{m}$ contains two identical machine models (24, 26), whose outputs are connected via a second subtractor (30) to the input side of an arithmetic unit (32), whose output forms the output (22) of the device (14), that the first input (16) of the device (14) is linked to the input of the first machine model (24) and to a negative input of a first subtractor (28), whose output is connected to the input side of the second machine model (26), the positive input of the first subtractor (28) being connected to the third input (20) of the device (14), and that the second input (18) of the device (14) is linked, on the one hand, to the first machine model (24) and, on the other hand, to the arithmetic unit (32).

12. Device (6) according to Claim 11, characterised in that an integrator is provided in each case as the machine model (24, 26).

13. Device (6) according to Claim 11, characterised in that a microcomputer is provided as the device (14) for correcting a modulation error ($\underline{m}$).

## Revendications

1. Procédé pour produire des signaux d'état de commutation (s$_v$) à partir d'un vecteur de tension de commande ($\underline{u}*_1$) pour un convertisseur statique à impulsions (4), selon lequel en fonction du vecteur de tension de commande ($\underline{u}*_{s1}$) et d'une fréquence angulaire ($\omega*$) sont déterminés, à partir d'une suite, produite à partir d'un modèle optimisé d'impulsions, de vecteurs complexes discrets d'état de commutation ($\underline{u}*_{sk}$), des états de commutation (S$_v$), auquel est appliqué un signal de correction ($\Delta t_s,\underline{u}_{p\mu}$) de sorte qu'une erreur complexe de modulation ($\underline{m}$), qui est déterminée en fonction du vecteur de tension de commande ($\underline{u}*_{s1}$), de la suite produite de vecteurs complets discrets d'état de commutation ($\underline{u}_{sk}$) et d'un vecteur mesuré de la tension statorique ($\underline{u}_s$), est réglée à zéro, ce signal de correction ($\Delta t_s,\underline{u}_{p\mu}$) étant calculé en fonction de la suite produite de vecteurs complexes discrets d'état de commutation ($\underline{u}_{sk}$) et de l'erreur de modulation complexe déterminée ($\underline{m}$).

2. Procédé suivant la revendication 1, caractérisé par les étapes opératoires suivantes :
   a) un modèle optimisé d'impulsions constitué par des modèles optimisés d'impulsions calculés en différé et mémorisés, est sélectionné en fonction de la valeur absolue de la fréquence du vecteur de la tension de commande ($\underline{u}*_{s1}$),
   b) une suite de vecteurs discrets complexes d'état de commutation ($\underline{u}_{sk}$) est produite à partir de ce modèle sélectionné d'impulsions,
   c) les états de commutation (S$_v$) sont déterminés en fonction de l'argument et de la fréquence du vecteur de la tension de commande ($\underline{u}*_{s1}$), au moyen de cette suite de vecteurs complexes discrets d'états de commutation ($\underline{u}_{sk}$),
   d) un vecteur de consigne d'harmonique (i$_{oswstat}$) est déterminé en fonction du vecteur de la tension de commande ($\underline{u}*_{s1}$) et de la suite de vecteurs complexes discrets d'états de commutation ($\underline{u}_{sk}$),
   e) un vecteur réel d'harmonique (i$_{osw}$) est déterminé en fonction d'un vecteur de différence de tension ($\underline{u}_{osw}$) déterminé à partir du vecteur de la tension de commande ($\underline{u}*_{s1}$) et d'une valeur mesurée de la tension statorique ($\underline{u}_s$),
   f) ce vecteur réel d'harmonique (i$_{osw}$) est soustrait du vecteur de consigne d'harmonique ($\underline{u}_{owstat}$), et
   g) l'erreur de modulation ($\underline{m}$), qui en résulte, est éliminée par réglage au moyen du traitement des états de commutation déterminés (S$_v$).

3. Procédé suivant la revendication 1, caractérisé par le fait que les états de commutation déterminés (S$_v$) sont traités de telle sorte qu'une transition d'un état de commutation actuel au suivant est décalée d'un intervalle de temps ($\pm\Delta t_s$).

4. Procédé suivant la revendication 1, caractérisé par le fait que les états de commutation déterminés (S$_v$) sont traités de telle sorte qu'on introduit des impulsions supplémentaires ($\underline{u}_{p1},\underline{u}_{p2}$).

11

5. Procédé suivant la revendication 3, caractérisé par le fait que la durée de décalage ($\pm\Delta t_s$) est calculée conformément à la relation :

$$\Delta t_s = \frac{\Delta u.m}{\lceil \Delta \underline{u}\rceil^2}$$

6. Procédé suivant la revendication 3, caractérisé par le fait que la durée de décalage ($\pm\Delta t_s$) est calculée conformément à la relation suivante :

$$\Delta \underline{u}_1.\Delta t_1 + \Delta \underline{u}_2.\Delta t_2 = \underline{m}.$$

7. Procédé suivant la revendication 4, caractérisé par le fait que les impulsions supplémentaires ($\underline{u}_{p1}, \underline{u}_{p2}$) possèdent des durées respectives ($t_1, t_2$), qui sont déterminées conformément à la relation suivante :

$$(\underline{u}_{p1} - \underline{u}_s).t_1 + (\underline{u}_{p2} - \underline{u}_s).t_2 = \underline{m}$$

avec $\underline{u}_s$ = vecteur instantané de la tension de commande.

8. Procédé suivant la revendication 2, caractérisé par le fait que le vecteur de consigne d'harmonique ($i_{oswstat}$) est calculé conformément à la relation suivante :

$$\underline{i}_{oswstat}(a_i) = 1/L_\sigma \int_0^t (\underline{u}_{sk}(a_i) - \underline{u}_{s1}(a_i))dt + \underline{c}$$

avec
$a_i$ = constante = surmodulation,
$\underline{c}$ = constante d'intégration,
la constante d'intégration ($\underline{c}$) étant déterminée conformément à la relation :

$$\underline{c} = -1/T \int_{t-T}^t 1/L_\sigma \int_0^t (\underline{u}_{sk}(a_i) - \underline{u}_{s1}(a_i))dt\ dt$$

9. Procédé suivant la revendication 2, caractérisé par le fait que le vecteur réel de l'harmonique ($i_{osw}$) est calculé conformément à la relation :

$$\underline{i}_{osw}(a_i) = 1/L_\sigma \int_0^t \underline{u}_{osw}(a_i)dt + \underline{c}$$

avec
$a_i$ = constante = surmodulation,
$\underline{c}$ = constante d'intégration
la constante d'intégration (c) étant déterminée conformément à la relation :

$$\underline{c} = -1/T \int_{t-T}^t 1/L_\sigma \int_0^t (\underline{u}_{osw}(a_i))dt\ dt$$

10. Dispositif (6) pour la mise en oeuvre du procédé suivant l'une des revendications 1 à 9, comportant un modulateur d'impulsions en durée (8) auquel est associée une mémoire (10), et un dispositif (12) pour identifier des signaux de commutation (S), caractérisé par le fait qu'il est prévu un dispositif (14) pour corriger une erreur de modulation ($\underline{m}$) et à la première entrée (16) duquel est envoyée une valeur de la tension de commande ($\underline{u}*_{s1}$), et à la seconde entrée (18) duquel est envoyée une suite de vecteurs complexes discrets d'état de commutation ($\underline{u}_{sk}$) et à la troisième entrée (20) duquel est envoyée une valeur mesurée de la tension statorique ($\underline{u}_s$), et dont la sortie (22) est reliée au dispositif (12) servant à produire des signaux de commutation ($S_v$).

11. Dispositif (6) suivant la revendication 10, caractérisé par le fait que le dispositif (14) servant à corriger une erreur de modulation (m) contient deux modèles identiques de machine (24,26), dont les sorties sont reliées, côté entrée, par l'intermédiaire d'un second circuit de différence (30), à une unité de calcul (32), dont la sortie forme la sortie (22) du dispositif (14), que la première entrée (16) du dispositif (14) est reliée à l'entrée du premier modèle de machine (24) et à une entrée négative d'un premier circuit de formation de différence (28), dont la sortie est reliée au côté entrée du second modèle de machine (26), l'entrée positive du premier circuit de formation de différence (28) étant reliée à la troisième entrée (20) du dispositif (14), et que la seconde entrée (18) du dispositif (14) est reliée d'une part au premier modèle de machine (24) et d'autre part à l'unité de calcul (32).

12. Dispositif (6) suivant la revendication 11, caractérisé par le fait que des intégrateurs sont prévus respectivement en tant que modèles de machines (24,26).

13. Dispositif (6) suivant la revendication 11, caractérisé par le fait qu'un micro-ordinateur est prévu en tant que dispositif (14) pour corriger une erreur de modulation (m).

FIG 1

FIG 2

EP 0 504 449 B1

FIG 3

FIG 4

16

FIG 5

FIG 7

$$j\,Im$$

$$\Delta \underline{u}^* \,\Delta t_s\,(\Delta t_s > 0)$$

$$\Delta \underline{u}^* \,\Delta t_s\,(\Delta t_s < 0)$$

$$\underline{m}_n$$

$$\underline{m}_{n+1}$$

$$\overrightarrow{Re}$$

FIG 6